**Europäisches Patentamt**

**European Patent Office**

**Office européen des brevets**

(11) Veröffentlichungsnummer: **0 365 034 B1**

(12) **EUROPÄISCHE PATENTSCHRIFT**

(45) Veröffentlichungstag der Patentschrift:
29.01.92 Patentblatt 92/05

(21) Anmeldenummer: **89119528.1**

(22) Anmeldetag: **20.10.89**

(51) Int. Cl.⁵: **B23K 1/018**

(54) **Entlötkolben.**

(30) Priorität: **21.10.88 DE 8813263 U**

(43) Veröffentlichungstag der Anmeldung:
**25.04.90 Patentblatt 90/17**

(45) Bekanntmachung des Hinweises auf die
Patenterteilung:
**29.01.92 Patentblatt 92/05**

(84) Benannte Vertragsstaaten:
**AT BE CH DE ES FR GB GR IT LI LU NL SE**

(56) Entgegenhaltungen:
**DE-U- 1 914 909**
**US-A- 3 259 293**
**US-A- 3 970 234**

(73) Patentinhaber: **COOPER INDUSTRIES, INC.**
**First City Tower Suite 4000 P.O. Box 4446**
**Houston Texas 77210 (US)**

(72) Erfinder: **Eisele, Ernst**
**Beethovenweg 1**
**W-7121 Walheim (DE)**
Erfinder: **Eisele, Fritz**
**Rathausstrasse 10/1**
**W-7121 Hessigheim (DE)**

(74) Vertreter: **Feldkamp, Rainer, Dipl.-Ing.**
**Patentanwälte Wallach, Koch, Dr. Haibach,**
**Feldkamp et al**
**P.O. Box 121120**
**W-8000 München 12 (DE)**

## Beschreibung

Die Erfindung bezieht sich auf einen Entlötkolben der im Oberbegriff des Anspruchs 1 genannten Art.

Bei derartigen Lötkolben wird das mit Hilfe der Entlötspitze zum Schmelzen gebrachte Lot über die Bohrung der Entlötspitze und ein Saugrohr abgesaugt, das in das vordere Ende eines langgestreckten Zinnsammelbehälters mündet, dessen anderes Ende mit einer Vakuumquelle verbunden ist, um das geschmolzene Lot duche die Entlötspitze und das Saugrohr hindurch in den Zinnsammelbehälter abzusaugen, in dessen Verlauf zumeist eine Prallplatte angeordnet ist, auf die das abgesaugte Zinn auftrifft, wobei hinter der Prallplatte ein luftdurchlässiges Filter angeordnet ist. Bei derartigen Entlötkolben sammelt sich das Zinn in dem Zinnsammelbehälter an, wobei die Gefahr besteht, daß das Zinn im Zinnsammelbehälter aufgrund der wärmeleitenden Verbindung mit dem Saugrohr und der Entlötspitze sowie der Nähe zu dem Heizelement des Entlötkolbens teilsweise in flüssigem Zustand gehalten wird und durch das Saugrohr bei Unterbrechung des Vakuums zurücktropft. Um dieses Zurücktropfen zu vermeiden, ist es bekannt, das Saugrohr gebogen auszubilden und in die vordere Stirnfläche des Zinnsammelbehälters münden zu lassen. Ein derartiges gebogenes Saugrohr verstopft jedoch leicht und ist schwierig zu reinigen.

Aus der US-A-3970234 ist ein Entlötkolben bekannt, bei dem sich das ein geradlinig ausgebildetes Saugrohr durch ein Befestigungsteil erstreckt, auf dessen hinteres Ende ein Glaszylinder mit einer Abschlußkappe aufgesteckt ist, die den Zinnsammelbehälter bildet. Zwischen dem Befestigungsteil und dem Inneren des Glaszylinders ist ein luftdurchlässiges Filter angeordnet, durch das sich das Saugrohr ebenfalls hindurch erstreckt. Im Inneren des Kopfstückes ist um das Saugrohr herum ein Luftraum gebildet, der mit einer Vakuumquelle in Verbindung steht. Die Luft aus dem im Inneren des Glaszylinders gebildeten Zinnsammelbehälter wird damit über das Filter in den Luftraum, und dann zur Vakuumquelle hin abgesaugt. Das Saugrohr erstreckt sich zwar über den Filter hinaus, so daß hierbei um den über den Filter vorspringenden Teil des Saugrohres herum eine Art von Zinnsammelraum gebildet wird, doch würde sich zurücktropfendes und in diesem Zinnsammelraum ansammelndes Zinn den Filter verstopfen, so daß der Entlötkolben nicht mehr funktionsfähig wäre.

Der Erfindung liegt die Aufgabe zugrunde, einen Entlötkolben der eingangs genannten Art zu schaffen, bei dem das Rücktropfen des abgesaugten Zinns vermieden wird, ohne daß die Verwendung eines gebogenen, schlecht zu reinigenden Rohres erforderlich ist.

Diese Aufgabe wird durch die im Anspruch 1 angegebenen Merkmale gelöst.

Vorteilhafte Ausgestaltungen und Weiterbildungen der Erfindung ergeben sich aus den Unteransprüchen.

Durch die erfindungsgemäße Ausgestaltung des Entlötkolbens ist sichergestellt, daß selbst bei Verwendung eines geradlinigen Saugrohres ein Zurücktropfen des abgesaugten Zinns sicher vermieden wird, da sich dieses Zinn um den in das Innere des konischen Endes vorspringenden Teil des Saugrohres herum ansammelt und damit unterhalb der Mündung des Saugrohres in dem Zinnsammelbehälter liegt.

Das konische Ende des Zinnsammelbehälters kann gemäß einer Ausgestaltung durch eine kegelstumpfförmige Endkappe gebildet sein, die mit einem zylindrischen Abschnitt des langgestreckten Zinnsammelbehälters verbunden ist. Das Saugrohr erstreckt sich unter einem rechten Winkel zu einer Mantellinie der konischen Mantelfläche in Richtung auf die Achse des Konus.

Gemäß einer Ausführungsform ist der Konuswinkel so gewählt, daß das aus dem innenliegenden Ende des Saugrohres austretende Zinn auf die Innenwand des zylindrischen Abschnittes unter einem schrägen Winkel derart auftrifft, daß das Zinn nicht an diesem zylindrischen Abschnitt, der vorzugsweise durch ein Glasrohr gebildet ist, haftet.

Gemäß einer anderren Ausgestaltung der Erfindung ist das in dem Zinnsammelbehälter angeordnete innenliegende Ende des Saugrohres in Richtung auf die Achse des Zinnsammelbehälters abgebogen, sodaß das abgesaugte Lötzinn mehr oder weniger nach hinten in den zylindrischen Abschnitt des Zinnsammelbehälters abgelenkt wird. Das Ausmaß dieser Umlenkung des geschmolzenen Zinns hängt dabei von dem Ausmaß der Abbiegung ab. Dadurch wird ebenfalls vermieden, daß sich das Lötzinn in gerader Linie zum Sauggrohr an der Glaswand aufbauen kann und gegebenenfalls nach einiger Zeit das innenliegende Ende des Saugrohrrendes zusetzt.

Gemäß einer vorteilhaften Ausgestaltung der Erfindung ist das Saugrohr weiterhin durch zwei Abschnitte gebildet, die durch ein Verbindungsstück aus wärmeisolierendem Material miteinander verbunden sind. Hierdurch wird die Wärmeleitung von der Entlötspitze zu dem Zinnsammelbehälter verringert sodaß allenfalls der am weitesten unten in dem konischen Ende des Zinnsammelbehälters liegende Teil des abgesaugten Zinns in flüssigem Zustand erhalten wird, während der höherliegende Teil dieses abgesaugten Zinnmaterials immer erstarrt ist und damit nicht in die Mündung des Saugrohres eintreten kann.

Ausführungsbeispiele der Erfindung werden im folgenden anhand der Zeichnungen noch näher erläutert.

In der Zeichnung zeigen :

2

Fig. 1  eine erste Ausführungsform des Entlötkolbens,
Fig. 2  eine zweite Ausführungsform des Entlötkolbens,
Fig. 3  eine erste Ausführungsform des innenliegenden Endes des Saugrohres,
Fig. 4  eine zweite Ausführungsform des innenliegenden Endes des Saugrohres.

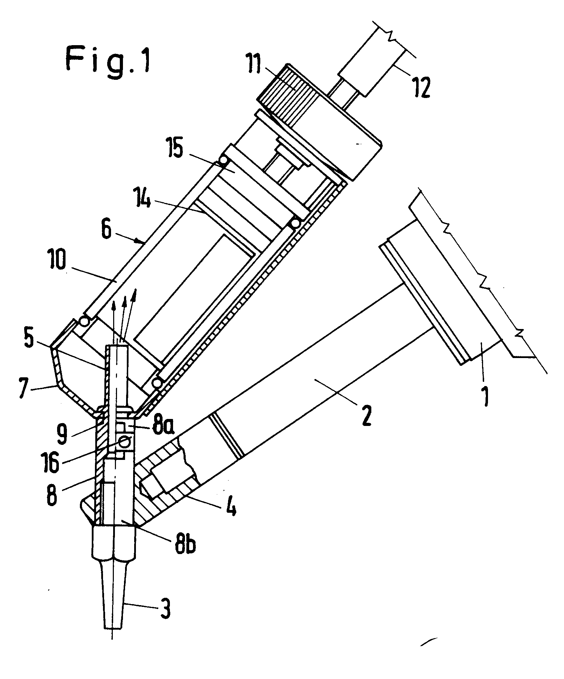

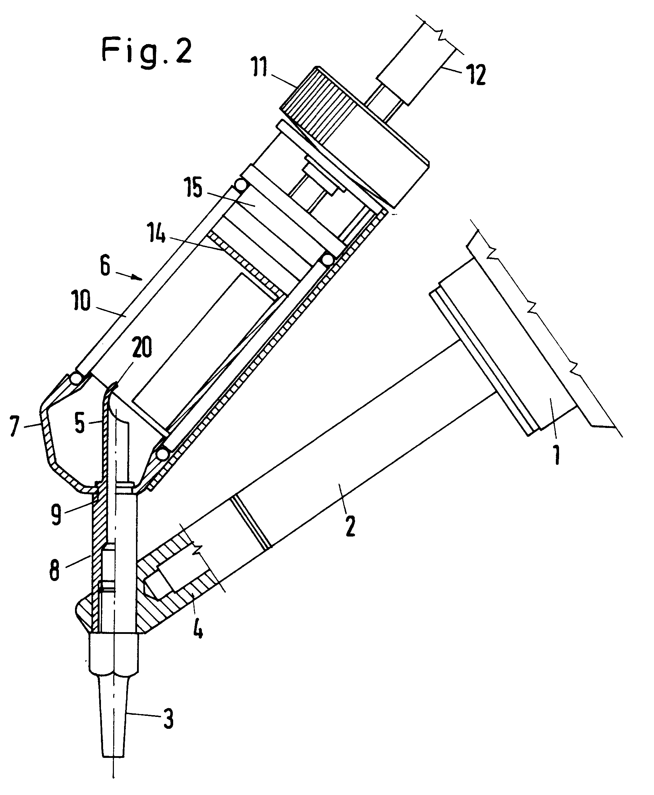

Die in den Figuren 1 und 2 dargestellten Ausführungsformen des Entlötkolbens weisen einen nur teilweise dargestellten Handgriff (1) üblicher Art auf, der mit dem Außenmantel eines Heizelementes (2) verbunden ist, in dessen freies Ende (4) eine Entlötspitze (3) einschraubbar ist. Die Entlötspitze (3) weist eine nicht dargestellte Mittelbohrung auf, die in ein Saugrohr (8) mündet, das mit dem vorderen Ende des Heizelementes (4) verbunden ist. Dieses Saugrohr (8) mündet in das vordere Ende (7) eines insgesamt mit (6) bezeichneten Zinnsammelbehälters, dessen hinteres Ende über eine Verschlußkappe (11) mit einem Vakuumschlauch (12) verbunden ist, der zu einer nicht dargestellten Vakuumquelle führt.

Das vordere Ende (7) des Zinnsammelbehälters (6) ist durch eine kegelstumpfförmige Endkappe gebildet, die in ihrer Mantelfläche entlang einer Mantellinie eine Bohrung (9) aufweist, durch die hindurch das Saugrohr (8) in das Innere des Zinnsammelbehälters (6) vorspringt, wobei ein vorspringender Teil (5) im Inneren des Zinnsammelbehälters (6) liegt. Wie aus der Zeichnung zu erkennen ist, wird damit um den Umfang des vorspringenden Teils (5) des Saugrohrs (8) ein Zinnsammelraum gebildet, der zunächst gefüllt sein muß, damit in diesem Zinnsammelraum gesammeltes abgesaugtes Zinn über die Mündung dieses vorspringenden Teils (5) in das Saugrohr wieder eintreten und zurücktropfen könnte.

Wie dies aus der Zeichnung zu erkennen ist, erstreckt sich die Achse des Saugrohres (8) unter einem rechten Winkel zu einer Mantellinie der konischen Mantelfläche der kegelstumpfförmigen Endkappe (7) in Richtung auf die Konusachse, sodaß diese Mantellinie in der Betriebsstellung des Entlötkolbens ungefähr waagerecht verläuft.

Bei der Ausführungsform nach Fig. 1 trifft das aus der Mündung des vorspringenden, innenliegenden Teils (5) des Saugrohres (8) austretende geschmolzene Zinn unter einem derartigen schrägen Winkel auf den an die Endkappe (7) anschließenden zylindrischen Abschnitt (10) des Zinnsammelbehälters (6) auf, daß dieses Zinn nicht an der Innenfläche dieses zylinderischen Abschnittes anhaften kann. Dies kann durch entsprechende Wahl des Konuswinkels erreicht werden.

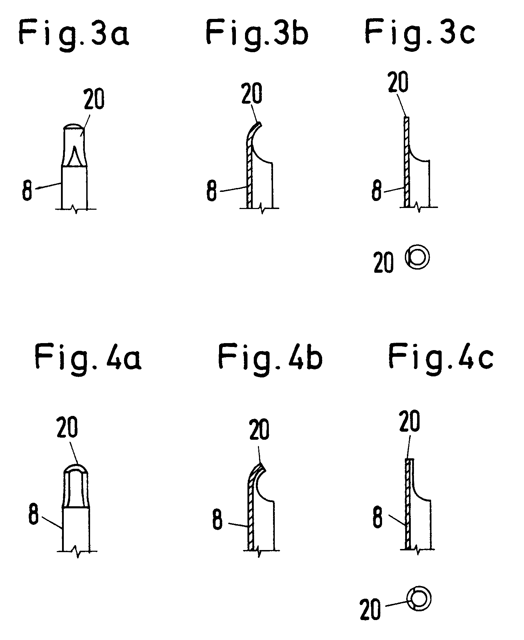

Bei der Ausführungsform nach Fig. 2 ist demgegenüber das innenliegende freie Ende des Saugrohres (8) in Richtung auf die Achse des zylindrischen Abschnittes (10) des Zinnsammelbehälters abgebogen, sodaß das abgesaugte Lötzinn mehr oder weniger nach hinten umgelenkt wird, wobei das Ausmaß dieser Umlenkung von der Abbiegung abhängt, wie dies anhand der Fig. 3 und 4 noch näher erläutert wird.

Im Inneren des Zinnsammelbehälters (6) ist weiterhin ein nur schematisch dargestelltes Prallblech (14) angeordnet, an dem sich ein Filter (15) anschließt, der die über das Saugrohr (8) mit abgesaugte Luft von festen Bestandteilen trennt.

Wie dies in Fig. 1 in der rechten Hälfte des Saugrohres (8) schematisch dargestellt ist, kann das Saugrohr (8) aus zwei Saugrohrabschnitten (8a, 8b) gebildet sein, die durch ein Verbindungsstück (16) aus wärmeisolierendem Material miteinander verbunden sind. Diese Unterteilung des Saugrohres ist in Fig. 2 nicht dargestellt.

In Fig. 3 ist eine erste Ausführungsform des innenliegenden abgebogenen Endes des Saugrohres nach Fig. 2 ausführlicher dargestellt. In Fig. 3c ist im unteren Teil eine Draufsicht auf das freie Ende des Saugrohres vor dessen Abbiegung dargestellt. Wie aus dieser Fig. zu erkennen ist, wird das freie, innenliegende Ende des Saugrohres fast bis auf die Wandstärke des Saugrohres hin abgeschrägt und der verbleibende Teil (20) des Mantels des Saugrohres (8) wird zur Achse des Saugrohres hin abgebogen, wie dies insbesondere aus Fig. 3b zu erkennen ist. Fig. 3a zeigt hierbei eine um 90° gedrehte Ansicht des Saugrohres nach Fig. 3b.

Bei der Ausführungsform des Saugrohres nach Fig. 4 erfolgt die Abschrägung nicht bis auf die Wandstärke des Saugrohres, sodaß ein Teil der Mantelfläche gemäß Fig. 4c stehen bleibt. Hierdurch ergibt sich ein etwa löffelförmiges Ende des Saugrohres, wie dies aus den Fig. 4a und 4b zu erkennen ist.

Wie bereits erwähnt, kann der bei der Abschrägung verbleibende Teil in unterschiedlichem Ausmaß, das heißt bis zur Achse des Saugrohres hin oder über diese Achse hinaus abgebogen, wodurch das Ausmaß der Umbiegung den Umlenkwinkel des abgesaugten Lötzinns bestimmt.

## Patentansprüche

1. Entlötkolben mit einer beheizten Entlötspitze (3), deren Bohrung über ein Saugrohr (8) mit dem vorderen Ende eines langgestreckten Zinnsammelbehälters (6) verbunden ist, dessen hinteres Ende über einen Vakuumschlauch mit einer Vakuumquelle verbunden ist, **dadurch gekennzeichnet**, daß das vordere Ende (7) des Zinnsammelbehälters (6) konisch ausgebildet ist, daß sich das Saugrohr (8) durch eine in der konischen Mantelfläche des konischen Endes des Zinnsammelbehälters (6) ausgebildete Bohrung (9) hindurch in diesen hinein erstreckt und gegenüber der Innenwand der Mantelfläche über eine erhebliche Srecke derart vorspringt, daß um den in das Innere des konischen Endes (7) vorspringenden Teil (5) des Saugrohres (8) herum ein Zinnsammelraum gebildet ist.

2. Entlötkolben nach Anspruch 1, **dadurch gekennzeichnet**, daß das konische Ende (7) des Zinnsammelbehälters (6) durch eine kegelstumpfförmige Endkappe gebildet ist.

3. Entlötkolben nach Anspruch 1 oder 2, **dadurch gekennzeichnet**, daß das Saugrohr (8) geradlinig ausgebildet ist und eine Längsachse aufweist, die sich unter einem rechten Winkel zu einer Mantellinie der Mantelfäche des konischen Endes (7) in Richtung auf die Konusachse erstreckt.

4. Entlötkolben nach Anspruch 3, **dadurch gekennzeichnet**, daß an das konische Ende (7) des Zinnsammelbehälters (6) ein zylindrischer Abschnitt (10) anschließt, auf dessen Innenwand das aus dem Saugrohr (8) austretende geschmolzene Zinn unter einem schrägen Winkel (10) auftrifft.

5. Entlötkolben nach einem der vorhergehenden Ansprüche, **dadurch gekennzeichnet,** daß das Saugrohr (8) aus zwei Saugrohrabschnitten (8a, 8b) gebildet ist, die durch ein Verbindungsstück (16) aus wärmeisolierendem Material miteinander verbunden sind.

6. Entlötkolben nach einem der vorhergehenden Ansprüche, **dadurch gekennzeichnet,** daß das innenliegende, sich in den Zinnsammelbehälter erstreckende Ende des Saugrohres (8) in Richtung auf die Achse des Zinnsammelbehälters (6) (bei 20) umgebogen ist, so daß das aus dem Saugrohr austretende geschmolzene Zinn nach hinten in den zylindrischen Abschnitt (10) des Zinnsammelbehälters abgelenkt wird.

7. Entlötkolben nach Anspruch 6, **dadurch gekennzeichnet,** daß am innenliegenden Ende des zylindrischen Saugrohres (8) ein Teil der Mantelfläche unter Abschrägung dieses Endes entfernt und der verbleibende Teil (20) in Richtung auf die Achse des Saugrohres (8) abgebogen ist.

8. Entlökolben nach Anspruch 7, **dadurch gekennzeichnet,** daß die Abbiegung kreisbogenförmig ist und sich die Spitze des verbleibenden Teils (20) bis zur Mittelachse des Saugrohres (8) erstreckt.

9. Entlötkolben nach einem der Ansprüche 6 bis 8, **dadurch gekennzeichnet,** daß sich die Abschrägung bis zur Wandstärke des Saugrohres (8) erstreckt (Fig. 3c).

10. Entlötkolben nach einem der Ansprüche 6 bis 8, **dadurch gekennzeichnet,** daß sich die Abschrägung bis zu einer Sehne des Querschnittes des Saugrohres (8) erstreckt (Fig. 4c).

## Claims

1. Desoldering tool comprising a heated desoldering tip (1) of which the bore is connected via a suction tube (8) to the front end of an elongated tin collecting container (6), the rear end of which is connected via a vacuum tube to a vacuum source, characterized in that the front end (7) of the tin collecting container (6) is made conical, that the suction tube (8) extends through a bore (9) formed in the conical surface of the conical end of the tin collecting container (6) into the latter and projects with respect to the inner wall of the surface via a considerable distance such that a tin collecting space is formed round the portion (5) of the suction tube (8) projecting into the interior of the conical end (7).

2. Desoldering tool according to claim 1, characterized in that the conical end (7) of the tin collecting container (6) is formed by a frustoconical end cap.

3. Desoldering tool according to claim 1 or 2, characterized in that the suction tube (8) is made rectilinear and has a longitudinal axis which extends at a right-angle to a generatrix of the surface of the conical end (7) in the direction towards the cone axis.

4. Desoldering tool according to claim 3, characterized in that the conical end (7) of the tin collecting container (6) is followed by a cylindrical portion (10) and that the cone angle is such that the molten tin emerging from the suction tube (8) meets the inner wall of the cylindrically portion (10) at an inclined angle.

5. Desoldering tool according to any of the preceding claims, characterized in that the suction tube (8) is formed by two suction tube portions (8a, 8b) which are connected together by a connecting piece (16) of thermally insulating material.

6. Desoldering tool according to any of the preceding claims, characterized in that the inwardly disposed end of the suction tube (8) extending into the tin collecting container is bent in the direction towards the axis of the tin collecting container (6) (at 20) so that the molten tin emerging from the suction tube is deflected rearwardly into the cylindrical portion (10) of the tin collecting container.

7. Desoldering tool according to claim 6, characterized in that at the inwardly disposed end of the cylindrical suction tube (8) a portion of the surface is removed with bevelling of said end and the remaining portion (20) is bent in the direction towards the axis of the suction tube (8).

8. Desoldering tool according to claim 7, characterized in that the bending is arcuate and the tip of the remaining portion (20) extends up to the centre axis of the suction tube (8).

9. Desoldering tool according to any one of claims 6 to 8, characterized in that the bevelling extends up to the wall thickness of the suction tube (8) (Fig. 3c).

10. Desoldering tool according to any one of claims 6 to 8, characterized in that the bevelling extends up to a chord of the cross-section of the suction tube (8) (Fig. 4c).

**Revendications**

1. Fer à désouder, avec une pointe de désoudage (3) chauffée, dont le perçage est relié, par un tube d'aspiration (8) à l'extrémité avant d'un réservoir collecteur d'étain (6) allongé, dont l'extrémité arrière est reliée à une source de vide par un tuyau à vide, caractérisé en ce que l'extrémité avant (7) du réservoir collecteur d'étain (6) est conique, en ce que le tuyau d'aspiration (8) s'étend dans le réservoir collecteur à étain (6) à travers un alésage (9) réalisé dans la surface d'enveloppe conique de l'extrémité conique dudit réservoir collecteur d'étain (6), et fait saillie par rapport à la paroi intérieure de la surface d'enveloppe, sur une distance notable, de telle façon qu'un espace collecteur d'étain est formé autour de la partie (5), faisant saillie à l'intérieur de l'extrémité conique (7), du tube d'aspiration (8).

2. Fer à désouder selon la revendication 1, caractérisé en ce que l'extrémité conique (7) du réservoir collecteur d'étain (6) est formé par un capuchon d'extrémité tronconique.

3. Fer à désouder selon la revendication 1 ou 2, caractérisé en ce que le tube d'aspiration (8) est rectiligne et présente un axe longitudinal qui s'étend en direction de l'axe du cône, en faisant un angle droit par rapport à une génératrice de la surface d'enveloppe de l'extrémité conique (7).

4. Fer à désouder selon la revendication 3, caractérisé en ce qu'à l'extrémité conique (7) du réservoir collecteur d'étain (6) est raccordée une section cylindrique (10), sur la paroi intérieure de laquelle arrive l'étain fondu, qui sort du tube d'aspiration (8), en faisant un angle de biais (10).

5. Fer à désouder selon l'une des revendications précédentes, caractérisé en ce que le tube d'aspiration (8) est formé de deux sections de tube d'aspiration (8a, 8b), reliées par une pièce de liaison (16) en un matériau isolant de la chaleur.

6. Fer à désouder selon l'une des revendications précédentes, caractérisé en ce que l'extrémité intérieure, qui s'étend dans le réservoir collecteur d'étain, du tube d'aspiration (8) est courbée en direction de l'axe du réservoir collecteur d'étain (6) (en 20), de façon que l'étain fondu qui sort du tube d'aspiration soit dévié vers l'arrière, dans la section cylindrique (10) du réservoir collecteur.

7. Fer à désouder selon la revendication 6, caractérisé en ce que, sur l'extrémité intérieur du tube d'aspiration cylindrique (8), une partie de la surface d'enveloppe est enlevée, en produisant un chanfreinage de cette extrémité, et la partie restante (20) étant recourbée en direction de l'axe du tube d'aspiration (8).

8. Fer à désouder selon la revendication 7, caractérisé en ce que le recourbement est en forme d'arc de cercle et la pointe de la partie restante (20) s'étend jusqu'à l'axe du tube d'aspiration (8).

9. Fer à désouder selon l'une des revendications 6 à 8, caractérisé en ce que le chanfreinage s'étend jusqu'à l'épaisseur de paroi du tube d'aspiration (8) (figure 3c).

10. Fer à désouder selon l'une des revendications 6 à 8, caractérisés en ce que le chanfreinage s'étend jusqu'à une corde de la section transversale du tube d'aspiration (8) (figure 4c).

# Fig.1

Fig.2

# Fig.3a

20

8

# Fig.3b

20

8

# Fig.3c

20

8

20

# Fig.4a

20

8

# Fig.4b

20

8

# Fig.4c

20

8

20